Europäisches Patentamt

European Patent Office

Office européen des brevets

(19)

(11) Numéro de publication: **0 103 267
B1**

(12) # FASCICULE DE BREVET EUROPEEN

(45) Date de publication du fascicule du brevet:
16.09.87

(21) Numéro de dépôt: **83108822.4**

(22) Date de dépôt: **07.09.83**

(51) Int. Cl.⁴: **F 16 D 3/12,** F 16 F 15/12,
F 16 H 45/02

(54) Dispositif d'amortissement des vibrations d'un coupleur élastique en milieu humide, en particulier pour convertisseur de couple.

(30) Priorité: **07.09.82 FR 8215192**

(43) Date de publication de la demande:
**21.03.84 Bulletin 84/12**

(45) Mention de la délivrance du brevet:
**16.09.87 Bulletin 87/38**

(84) Etats contractants désignés:
**BE DE GB IT NL SE**

(56) Documents cités:
**FR - A - 2 183 390
FR - A - 2 218 503
FR - A - 2 282 578
FR - A - 2 393 199
GB - A - 1 482 639
GB - A - 1 492 982
US - A - 4 289 220**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Aliouate, Ali, 52-54 rue de Fontenay,
F-94300 Vincennes (FR)**

(74) Mandataire: **Casalonga, Alain et al, BUREAU D.A.
CASALONGA OFFICE JOSSE & PETIT Morassistrasse 8,
D-8000 München 5 (DE)**

## Description

L'invention concerne les dispositifs d'accouplement élastique tels que ceux utilisés dans les convertisseurs cinétiques de couple, et plus particulièrement ceux des convertisseurs de couple qui sont associés à une boîte de vitesse à dérivation de puissance du type dans lequel, pour certains rapports au moins, la partie dérivée de la puissance transite directement de l'arbre moteur au mécanisme de la boîte sans passer par le convertisseur de couple dans le but d'améliorer le rendement.

Pour assurer une certaine douceur dans la transmission de cette partie dérivée de la puissance, il est connu d'interposer, entre l'organe d'entrée formé par l'enveloppe du convertisseur (pompe) en liaison directe avec le volant-moteur et l'organe de sortie correspondant à la transmission directe de la puissance mécanique, un accouplement élastique constitué généralement par des ressorts hélicoïdaux disposés à la périphérie, en direction tangentielle et interposés entre les deux organes.

Une telle disposition présente cependant l'inconvénient, lors des manœuvres de boîte ou des accélérations brutales, d'engendrer entre les deux organes des vibrations ou des oscillations qui sont préjudiciables au bon fonctionnement.

Un problème semblable se rencontre dans le domaine plus classique des embrayages à disque. Par exemple dans le document FR-A-2 218 503 ce problème est résolu en ajoutant entre le disque (organe d'entrée) et son moyeu (organe de sortie) une série de ressorts hélicoïdaux du type précédent, en parallèle avec un dispositif à friction élastique servant d'amortisseur en rotation. Cependant une telle solution serait difficilement applicable à un convertisseur hydrocinétique de couple en raison de son encombrement excessif.

Il est vrai qu'il est connu, d'après le document US-A-4 289 220, d'utiliser l'espace périphérique résiduel entre le fond sensiblement plat de la partie pompe d'un convertisseur hydrocinétique et l'enveloppe demi-toroïdale de sa partie turbine pour loger des ressorts hélicoïdaux tangentiels. Toutefois cette solution ne résout pas le problème posé, car un tel convertisseur n'est pas du type à dérivation de puissance. En effet les ressorts en question ne sont pas interposés entre l'enveloppe de la pompe et une sortie de puissance partielle dérivée, mais au contraire entre la turbine et un disque intermédiaire, lequel peut être embrayé par friction et par commande hydraulique avec la pompe lorsqu'on veut assurer le «pontage», c'est-à-dire l'éliminiation du coupleur hydraulique et de son glissement. Il est clair dans ce cas que la garniture de friction ne sert aucunement à assurer un amortissement des oscillations.

Pour éviter de telles oscillations il est également connu d'interposer entre ces deux organes un dispositif d'amortissement en rotation, lequel est constitué essentiellement par: deux flasques annulaires fixés par rivetage sur un des organes, en général sur le fond plat de l'enveloppe rotative du convertisseur; un disque solidaire de l'autre organe et comportant des garnitures de friction sur ses deux faces, ce disque étant intercalé entre les deux flasques; une rondelle lisse indexée en rotation par rapport au deuxième flasque et venant s'appuyer sur le disque; et enfin une rondelle élastique ondulée interposée entre le deuxième flasque et la rondelle indexée pour maintenir un effort de compression axiale de l'ensemble de l'empilement. Cette disposition est relativement encombrante et onéreuse.

Le but de l'invention est de réaliser un ensemble équivalent d'une manière plus simple et moins encombrante.

Dans la disposition simplifiée selon l'invention, les logements des ressorts de l'accouplement sont situés dans l'espace résiduel périphérique subsistant entre la face intérieure de l'organe d'entrée et l'enveloppe demi toroïdale de la turbine; d'autre part le dispositif d'amortissement est situé dans l'espace résiduel central subsistant entre ladite face intérieure de l'organe d'entrée et l'enveloppe demi toroïdale de la turbine; enfin un flasque servant à l'engagement d'indexation de la rondelle indexée et d'appui pour la rondelle élastique se fixe sur ladite face intérieure de l'organe d'entrée, en passant à travers des découpages appropriés pratiqués dans la pièce intérieure de l'accouplement, dans l'espace plus étroit situé entre lesdits espaces résiduels périphérique et central.

D'autres particularités de l'invention apparaîtront à la description qui va suivre d'un mode de réalisation pris comme exemple et représenté sur le dessin annexé sur lequel:

la figure 1 est une demi-coupe axiale partielle d'un premier mode de réalisation;

la figure 2 est une vue partielle à plus grande échelle de la partie médiane de la figure 1;

la figure 3 est une vue de face de la figure 1;

la figure 4 est une demi-coupe partielle d'une variante de réalisation;

la figure 5 représente le détail d'une partie médiane de la figure 4; et

la figure 6 est une demi-coupe partielle d'une autre variante de réalisation.

On voit sur les figures l'organe d'entrée 1 du convertisseur qui est constitué par l'enveloppe extérieure rotative constituant le couvercle de la pompe centrifuge et solidarisée par les fixations 2 avec le volant-moteur. On voit également en 3 l'organe de sortie directe du convertisseur permettant de transmettre la puissance à la boîte de vitesses non représentée sans passer par le convertisseur. On voit en 4 l'élément intérieur de l'accouplement élastique qui est solidaire en 5 de l'organe de sortie 3 et qui comporte à sa périphérie des encoches pour le logement des ressorts de compression 6, ces ressorts étant par ailleurs emprisonnés dans des fenêtres formées respectivement dans les éléments extérieurs 7 et 8 solidaires de l'organe d'entrée 1.

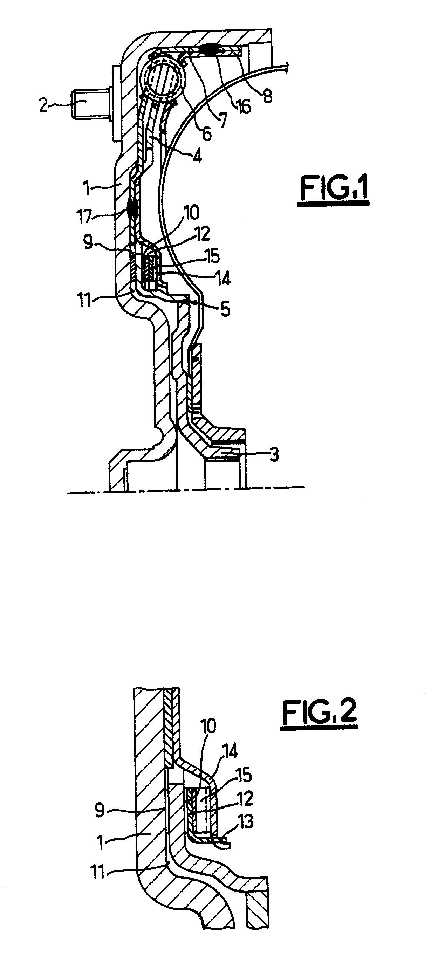

Le dispositif d'amortissement selon l'invention est constitué en collant les garnitures de friction habituelles 9 et 10 (figure 2) directement sur les deux faces d'une zone annulaire de l'élément 4, qui en plus de sa fonction d'élément de l'accouplement élastique joue ainsi le rôle de disque de friction habituel.

La garniture 9 frotte directement sur la face intérieure 11 de l'enveloppe 1, cette dernière jouant par conséquent également el rôle du premier flasque habituel.

L'autre garniture 10 frotte sur la rondelle indexée habituelle 12, dont les dents d'immobilisation 13 s'engagent dans un flasque 14 sur lequel prend également appui la rondelle élastique ondulée habituelle 15 interposée entre la rondelle indexée 12 et le flasque 14.

Les deux pièces 7 et 8 de l'accouplement élastique peuvent être fixées directement par points de soudure 16 dans l'organe d'entrée 1 comme représenté sur la figure 1, tandis que le flasque 14 peut être fixé également par points de soudure à ce même organe 1 en même temps que la pièce 7. Il serait naturellement possible d'utiliser tout autre mode de fixation, par exemple des rivets classiques.

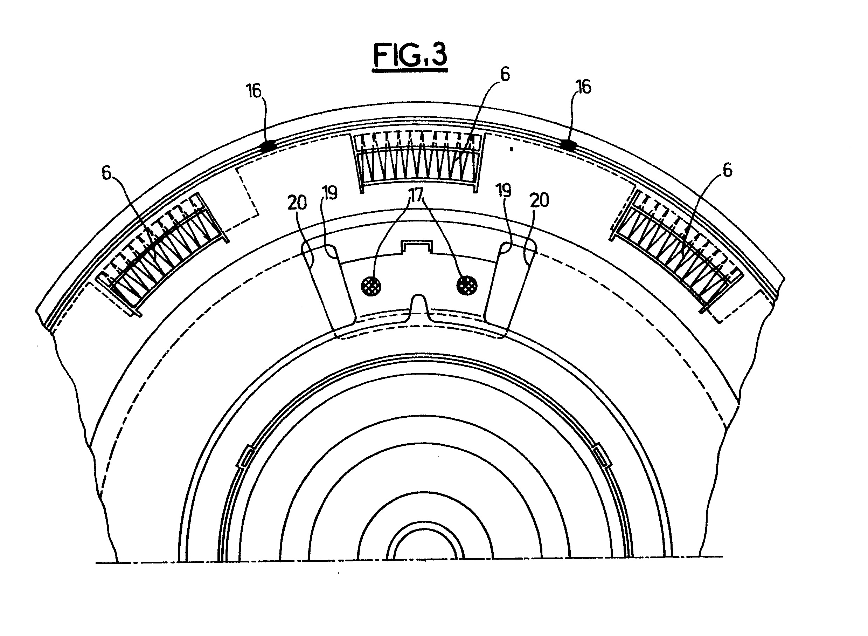

On voit sur la figure 3 le détail des découpages 19 et 20 grâce auxquels le flasque 14 peut se fixer de la manière indiquée en passant à travers l'organe 4. En outre ces découpages 19 et 20 sont dimensionnés de manière à servir en même temps de butées angulaires entre les deux organes 4 et 7–8.

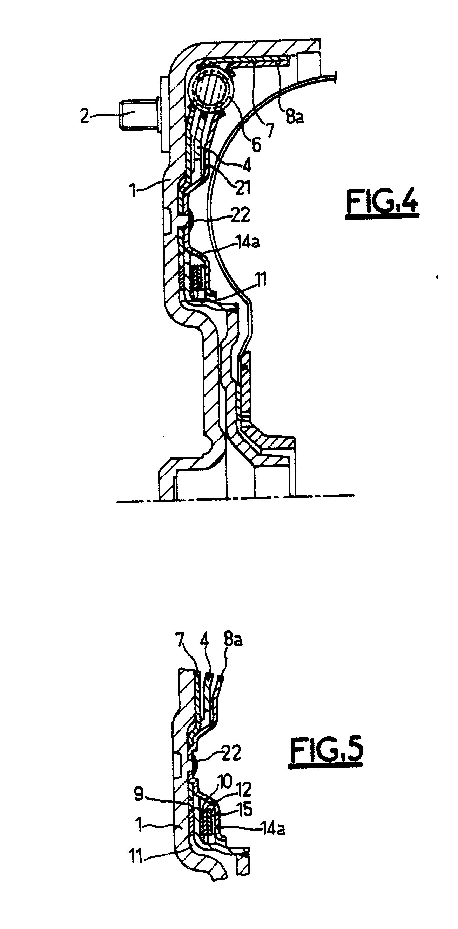

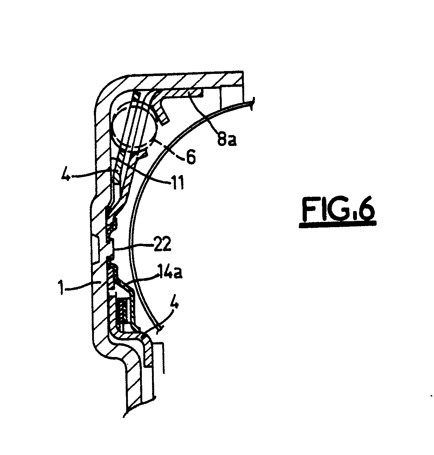

En variante on peut également, comme représenté sur les figures 4 et 5, supprimer le flasque 14 en le réalisant d'une seule pièce avec la pièce 8, la nouvelle pièce ainsi obtenue portant la référence 21 et comportant une partie extérieure 8a et une partie intérieure 14a jouant respectivement les rôles des parties 8 et 14 précédentes. Avec cette dernière variante, on voit qu'une seule rangée de fixations 22 suffit à fixer à la fois les pièces 7 et 21 à l'organe 1, à la place des deux rangées de points de soudure 16 et 17 précédentes. Ces fixations 22 peuvent également être constituées par des points de soudure ou des rivets, ou encore comme représenté sur les figures 4 et 5 par des tétons formés en place dans l'épaisseur de l'organe 1 et rivetés à l'intérieur du dispositif.

A partir de cette variante de réalisation il est possible de simplifier encore davantage le dispositif en supprimant également la pièce 7 qui ne sert qu'à retenir latéralement les ressorts 6 et à constituer leurs butées axiales symétriques en coopérant avec la partie 8a. La première fonction peut être assurée directement par la face intérieure 11 de l'enveloppe 1. La deuxième fonction peut être évitée en utilisant des butées légèrement dissymétriques pour les extrémités des ressorts 6. Pour cela les surfaces en regard des deux organes restants 4 et 8a de l'accouplement élastique sont placées en position rapprochée de part et d'autre du plan médian de chaque ressort 6, comme représenté sur la figure 6.

Dans ce cas il est en général nécessaire de donner à la partie 8a une épaisseur plus grande que celle des pièces 7 et 8 d'origine pour assurer la même résistance. On peut alors soit donner à la partie 14a une épaisseur correspondante afin de réaliser une pièce unique, analogue à 21, groupant les parties extérieures 8a et intérieure 14a, soit encore réaliser des pièces séparées, c'est-à-dire une pièce extérieure 8a épaisse et une pièce intérieure 14a plus mince, comme représenté sur la figure 6. Dans les deux cas on conserve l'avantage précédent de ne nécessiter qu'une seule ligne de fixation 22, tout en ayant des pièces moins nombreuses ou plus simples.

On voit ainsi que l'invention, notamment sous ses dernières formes, permet de réduire considérablement le nombre de pièces et le nombre d'opérations d'assemblage nécessaires. De plus, il est clair que l'encombrement se trouve notablement réduit par rapport à la disposition classique.

**Revendications**

1. Dispositif d'amortissement des vibrations d'un accouplement élastique disposé contre la face intérieure (11) sensiblement plate d'un organe d'entrée (1) formé par l'enveloppe d'un convertisseur hydrocinétique de couple avec pompe et turbine classiques à enveloppes demi toroïdales, accouplement destiné à transmettre directement à une boîte de vitesses à dérivation de puissance la partie dérivée de la puissance qui ne transite pas par le coupleur hydrocinétique, l'accouplement comportant des ressorts hélicoïdaux de compression (6) à action tangentielle emprisonnés dans des logements formés entre deux pièces extérieures (7, 8; 7, 8a; 7, 21; 1, 8a) solidaires de l'organe d'entrée (1) et sur lesquelles vient agir un élément intérieur (4) solidaire d'un organe de sortie (3) de la puissance dérivée, le dispositif d'amortissement étant constitué par des garnitures de friction (9, 10) collées directement sur les deux faces d'une zone annulaire de l'élément intérieur (4) de l'accouplement portant sur ladite face intérieure (11) et sur une rondelle indexée (12) pressée par une rondelle élastique ondulée (15), caractérisé par le fait

– que lesdits logements des ressorts (6) de l'accouplement sont situés dans l'espace résiduel périphérique subsistant entre ladite face intérieure (11) de l'organe d'entrée (1) et l'enveloppe demi toroïdale de la turbine,

– que ledit dispositif d'amortissement est situé dans l'espace résiduel central subsistant entre ladite face intérieure (11) de l'organe d'entrée de l'enveloppe demi toroïdale de la turbine, et

– qu'un flasque (14) servant à l'engagement d'indexation de la rondelle indexée (12) et d'appui pour la rondelle élastique (15) se fixe sur ladite face intérieure (11) de l'organe d'entrée (1), en passant à travers des découpages appropriés (20) pratiqués dans la pièce intérieure (4) de l'accouplement, dans l'espace plus étroit situé entre lesdits espaces résiduels périphérique et central.

2. Dispositif selon la revendication 1, caractérisé par le fait que celle (8a) des pièces extérieures de l'accouplement élastique qui est la plus proche de l'enveloppe demi toroïdale de la turbine se fixe elle aussi directement sur ladite face intérieure (11) en passant à travers les mêmes découpages (20) de l'élément intérieur (4) de l'accouplement et en utilisant les mêmes moyens de fixation (17, 22).

3. Dispositif selon la revendication 2, caractérisé par le fait qu'il comporte une pièce unique (21) formée d'une partie intérieure (14a) jouant le rôle du flasque (14) et d'une partie extérieure (8a) jouant le rôle de celle (8) des pièces extérieures de l'accouplement élastique qui est la plus proche de l'enveloppe demi-toroïdale de la turbine.

4. Dispositif selon une des revendications 2 et 3, caractérisé par le fait que celle desdites pièces extérieures de l'accouplement élastique qui est la plus éloignée de l'enveloppe demi-toroïdale de la turbine est constituée directement par la face intérieure (11) de l'organe d'entrée (1), les faces en regard des parties (4 et 8a) qui forment les butées d'extrémité des ressorts (6) étant disposées en position rapprochée de part et d'autre du plan médian des ressorts (6), ces ressorts étant maintenus chacun entre deux de leurs génératrices, qui sont en contact avec les bords d'une fenêtre de l'autre pièce extérieure (8a), et une troisième génératrice de contact avec ladite face intérieure (11) de l'organe d'entrée (1).

## Claims

1. Vibration damper for an elastic coupling disposed against the substantially flat inner face (11) of an input member (1) formed by the casing of a hydrokinetic torque converter having conventional pump and turbine with semitoroidal casings, said coupling being intended for direct transmission to a power branching gearbox of the branched part of the power which does not pass through the hydrokinetic coupler and being provided with tangentially acting helical compression springs (6) held captive in seats formed between two outer members (7, 8; 7, 8a; 7, 21; 1, 8a) which are fastened to the input member and which are acted on by an inner member (4) fastened to a branched power output member (3), the damper being composed of friction linings (9, 10) bonded directly to the two faces of an annular zone of the inner member (4) of the coupling which bear against said inner face (11) and against an indexed washer (12) pressed by a corrugated spring washer (15), characterized by the fact
- that said seats receiving the coupling springs are situated in the residual peripheral space remaining between said inner face (11) of the input member (1) and the semitoroidal casing of the turbine,
- that said damper is situated in the residual central space remaining between said inner face (11) of the input member and the semitoroidal casing of the turbine, and
- that a plate (14) serving for indexing engagement of the indexed washer (12) and for the support of the spring washer (15) is fixed on said inner face (11) of the input member (1), passing through appropriate cutouts (20) formed in the inner member (4) of the coupling, in the narrow space situated between said residual peripheral and central spaces.

2. Damper according to Claim 1, characterized by the fact that one (8a) of the outer members of the elastic coupling which is closest to the semitoroidal casing of the turbine is also fixed directly on said inner face (11), passing through the same cutouts (20) in the inner member (4) of the coupling and utilizing the same fastening means (17, 22).

3. Damper according to Claim 2, characterized by the fact that it comprises a single member (21) composed of an inner part (14a) serving the function of the plate (14) and an outer part (8a) serving the function of that one (8) of the outer members of the elastic coupling which is the closest to the semitoroidal casing of the turbine.

4. Damper according to one of Claims 2 and 3, characterized in that that one of the outer members of the elastic coupling which is farthest from the semitoroidal casing of the turbine is constituted directly by the inner face (11) of the input member (1), the oppositely disposed faces of the parts (4 and 8a) which form the end stops of the springs (6) being disposed in close positions one on each side of the median plane of the springs (6), said springs being each held between two of their generatrices which are in contact with the edges of a window in the other outer member (8a), and a third generatrix in contact with said inner face (11) of the input member (1).

## Patentansprüche

1. Vibrationsdämpfungsvorrichtung einer elastischen Kupplung, die gegen die im wesentlichen flache Innenfläche (11) eines Eingangsteils (1) angeordnet ist, das von dem Gehäuse eines Strömungsdrehmomentwandlers gebildet wird, der mit dem herkömmlichen Pumpen- und Turbinenrad mit schalenförmigen Gehäusen ausgestattet ist, welche Kupplung zur direkten Übertragung auf das Kraftableitgetriebe des Teils der abgeleiteten Kraft, der nicht über die Strömungskupplung läuft, bestimmt ist und tangentiell wirkende, schraubenförmige Druckfedern (6) beinhaltet, die in zwischen zwei, mit dem Eingangsteil (1) fest verbundenen Aussenteilen (7, 8; 7, 8a; 7, 21; 1, 8a) ausgebildeten Lagern eingeschlossen sind und auf die ein mit dem Ausgangsteil (3) der abgeleiteten Kraft fest verbundenes Innenteil (4) einwirkt, wo-bei die Vibrationsdämpfungsvorrichtung Reibbe-läge (9, 10) beinhaltet, die direkt auf die beiden Flächen einer ringförmigen Zone des Innenteils (4) der Kupplung aufgeklebt sind, die sich auf die genannte Innenfläche (11) und auf eine gezahnte Rundscheibe (12) stützt, auf die eine gewellte elastische Rundscheibe (15) drückt, dadurch gekennzeichnet,

dass die genannten Lager der Federn (6) in einem zwischen der genannten Innenfläche (11) des Eingangsteils (1) und dem schalenförmigen Gehäuse des Turbinenrades befindlichen peripheren Restzwischenraum gelegen sind,

dass die genannte Vibrationsdämpfungsvorrichtung in einem zwischen der genannten Innenfläche (11) des Eingangsteils und dem schalenförmigen Gehäuse des Turbinenrades befindlichen zentralen Restzwischenraum gelegen ist, und

dass ein Kurbelarm (14), der dem Eingreifen der Verzahnung der gezahnten Rundscheibe (12) und als Stütze der elastischen Rundscheibe (15) dient, durch geeignete Ausschnitte (20) im Innenteil (4) der Kupplung führt, an der zwischen den genannten peripheren und zentralen Restzwischenräumen gelegenen engsten Stelle, und auf der genannten Innenfläche (11) des Eingangsteils (1) befestigt ist.

2. Vorrichtung nach Anspruch 1, dadurch gekennzeichnet, dass jenes (8a) der Aussenteile der elastischen Kupplung, das dem schalenförmigen Gehäuse des Turbinenrades am nächsten ist, auch direkt auf der genannten Innenfläche (11) befestigt ist und durch dieselben Ausschnitte (20) des Innenteiles (4) der Kupplung führt, wobei dieselben Befestigungsmittel (17, 22) zur Anwendung kommen.

3. Vorrichtung nach Anspruch 2, dadurch gekennzeichnet, dass sie ein einziges Stück (21) beinhaltet, gebildet aus einem die Funktion des Kurbelarms (14) übernehmenden inneren Teils (14a) und einem die Funktion desjenigen (8) der Aussenteile der elastischen Kupplung übernehmenden äusseren Teils (8a), das dem schalenförmigen Gehäuse des Turbinenrads am nächsten ist.

4. Vorrichtung nach einem der Ansprüche 2 und 3, dadurch gekennzeichnet, dass jenes der genannten Aussenteile der elastischen Kupplung, das am weitesten vom schalenförmigen Gehäuse des Turbinenrades entfernt ist, direkt aus der Innenfläche (11) des Eingangsteils (1) besteht, wobei die Flächen, bezogen auf die Teile (4 und 8a), die die Endanschläge der Federn (6) bilden, beiderseits in genäherter Position zur Mittelfläche der Federn (6) angeordnet sind, wobei jede dieser Federn zwischen zwei ihrer Generatoren, die mit den Rändern eines Fensters des anderen Aussenteils (8a) verbunden sind, und einem dritten Generator gehalten wird, der mit der genannten Innenfläche (11) des Eingangsteils (1) verbunden ist.

**FIG.1**

**FIG.2**

FIG.3

0 103 267

FIG.4

FIG.5

FIG.6